Europäisches Patentamt

European Patent Office

Office européen des brevets

(19)

(11) Veröffentlichungsnummer: **0 150 448**
**B1**

(12) **EUROPÄISCHE PATENTSCHRIFT**

(45) Veröffentlichungstag der Patentschrift: **12.09.90**

(21) Anmeldenummer: **84115864.5**

(22) Anmeldetag: **19.12.84**

(51) Int. Cl.⁵: **H 05 B 3/28**

(54) **Elektrogerät zur Verwendung als Flächenheizelement.**

(30) Priorität: **29.12.83 DE 3347492**

(43) Veröffentlichungstag der Anmeldung:
**07.08.85 Patentblatt 85/32**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**DE-A-1 908 734**
**DE-A-2 207 883**
**DE-A-2 619 242**
**FR-A-2 421 528**
**US-A-2 844 696**

(73) Patentinhaber: **Pfleiderer Holzwerkstoffe GmbH
& Co. KG
Lenggrieser Strasse 52-54
D-8170 Bad Tölz (DE)**

(72) Erfinder: **Menges, Eduard
Jahnstrasse 27
D-8170 Bad Tölz (DE)**
Erfinder: **Buchberger, Alois
Lindenweg 24
D-8172 Lenggries (DE)**

(74) Vertreter: **Dipl.-Ing. Schwabe, Dr. Dr. Sandmair,
Dr. Marx
Stuntzstrasse 16
D-8000 München 80 (DE)**

## Beschreibung

Die Erfindung betrifft ein Elektrogerät nach dem Oberbegriff des Anspruchs 1.

Ein solches Elektrogerät ist bereits aus der DE-A-2 207 883 bekannt. Das bekannte, als Flächenheizelement ausgebildete Elektrogerät weist neben einer Grundplatte auch eine Deckplatte auf, wobei zwischen der Grundplatte und der Deckplatte eine Heizfolie angeordnet ist. Die Heizfolie wird vermittels zweier an ihren einander gegenüberliegenden Rändern angeordneter Kontaktbänder über einen Außenanschluß mit mindestens zwei Kontakten mit Strom versorgt. Bei dieser bekannten Konstruktion ist ferner der Anschluß im Bereich einer Ausnehmung des Verbundes ausgebildet, und es sind an einem weiteren Randbereich des Flächenheizelementes Kontaktierungsvorsprünge vorgesehen, so daß bei dieser bekannten Konstruktion die Möglichkeit geschaffen wird, ein Flächenheizelement elektrisch mit einem weiteren Flächenheizelement zu verbinden.

Diese Verbindung besteht aber nicht aus einer Steckverbindung. Sie besteht vielmehr aus einem Ende des betreffenden Kontaktbandes und einem Kontaktierungsvorsprung am gegenüberliegenden Randbereich des Heizelementes, die bei Aneinanderliegen zweier Flächenheizelemente übereinander gelegt werden, so daß der Kontaktierungsvorsprung in die Ausnehmung des benachbarten Heizelementes ragt. Die Kontaktierungselemente müssen dann allerdings noch miteinander verlötet werden. Nach dem Verlöten muß ferner noch ein den Ausnehmungen entsprechendes Paßstück angefertigt und in die Ausschnitte eingesetzt bzw. eingeklebt werden.

Da bei der Verlötung jedoch unterschiedliche Kontaktierungsdickenbereiche entstehen können, kann bei dieser bekannten Konstruktion der Nachteil auftreten, daß die Paßstücke nicht mehr exakt in die Ausschnitte passen und nachbearbeitet werden müssen, wodurch der gesamte Vorgang des Verlegens der Heizelemente kompliziert und aufwendig wird.

Diese bekannte Konstruktion bietet ferner auch nicht die üblicherweise zu fordernde Sicherheit, da beispielsweise dann, wenn die Anschlußplatte an Spannung liegt, elektrische Kontakte frei liegen, was für den betreffenden Monteur außerordentlich gefährlich werden kann. Darüberhinaus müssen nach dem Verlöten der Kontakte Isolierungen vorgesehen werden, wobei aber eine vollständige Isolierung kaum möglich ist, da zwischen zwei aneinandergelegten Heizelementen immer ein offener Schlitz vorhanden bleibt, der schlecht oder überhaupt nicht isoliert werden kann.

Aus der DE-PS 839 539 ist eine Flächenheizvorrichtung für Raumheizungen, z.B. Decken-, Wandoder Fußbodenbelag, die aus einer zwischen zwei Holzwerkstoffen eingebrachten elektrisch leitenden Schicht besteht, bekannt. Dort sind allerdings linienförmig verlegte Heizleiter verwandt worden. Flächenartige Heizleiter mit gegenüberliegenden Elektroden sind aus der CH-PS 491 576 bekannt.

Es ist ferner bekannt, Flächenheizelemente aus Glasfasergewebe mit einem Kohlenstoff-Graphit-Gemisch zu beschichten, beidseitig in Polyester einzuschweißen bzw. zu versiegeln und mit Kupferkontaktbändern zu versehen. Vergleichbare Ausführungen sind in der DE-AS 1 565 015 und der DE-OS 1 565 352 dargestellt.

Ein Elektrogerät zur Verwendung als Flächenheizelement ist z.B. auch aus der Zeitschrift "Hobby, Magazin der Technik", Nr. 11 vom 24.5.1983, Seite 18 und 19 bekannt.

Der Erfindung liegt die Aufgabe zugrunde, ein Elektrogerät zur Verwendung als Flächenheizelement der im Anspruch 1 angegebenen Gattung zu schaffen, welches ohne jegliche Löt- oder Schweißarbeit zu iner flächendeckenden Heizeinrichtung zusammengestellt werden kann, und zwar insbesondere der Art, daß sich eine vollkommen ebene Oberfläche der Heizelemente erzielen läßt, bei der sich Fehler beim Zusammenfügen der einzelnen Heizelemente wegen ihrer optischen Offensichtlichkeit verhindern lassen. Zudem genügt die erfindungsgemäße Ausführungsform hohen Sicherheitsanforderungen.

Diese Aufgabe wird erfindungsgemäß durch die im kennzeichnenden Teil des Anspruchs 1 aufgeführten Merkmale gelöst.

Erfindungsgemäß ist der Außenanschluß als Steckverbinderhälfte ausgebildet und ferner liegt der elektrische Kontakt der Steckverbinderhälfte außerhalb der Ausnehmung, so daß die Ausnehmungshälfte keinen elektrischen Kontakt bzw. freiliegenden Kontakt aufweist. Die elektrischen Kontakte sind ferner in der Verbundanordnung so angeordnet, daß die Steckrichtung im wesentlichen parallel zur Ebene der Flächenheizelemente verläuft.

Der Kontaktierungsvorsprung ist ferner als komplementäre Steckverbinderhälfte ausgebildet und ist ferner auch so gestaltet, daß sie im zusammengesteckten Zustand die Ausnehmung bündig ausfüllt. Durch dieses letztere Merkmal läßt sich eine glatte durchgehende Oberfläche der Flächenheizelemente erzielen. Ferner wird durch dieses Merkmal erreicht, daß die Flächenheizelemente eine bestimmte mechanisch-feste Verbindung miteinander eingehen.

Dadurch, daß der Außenanschluß als zumindest teilweise in einer Ausnehmung in der Grundund/oder Deckplatte aufgenommene Steckverbinderhälfte ausgebildet ist, läßt er sich unmittelbar an eine geeignet angebrachte zugehörige Steckverbinderhälfte, z.B. an der Wand oder einem benachbarten Elektrogerät, anschließen, so daß keine Kabel von jedem Gerät zur Haupt-Stromversorgung geführt werden müssen. Die im Gerät als Außenanschluß vorgesehene Steckverbinderhälfte ist dabei vorzugsweise eine Stiftsteckdose, wenn durch sie der Strom in das Gerät eingeführt werden soll. Die stromzuführende Gegensteckdose bzw. der Stecker kann hier als Buchsensteckverbinder ausgebildet sein.

Bevorzugt werden dabei die Kontakte an ihrem Rückende mit den jeweiligen Kontaktbändern verltet.

Bevorzugt ist die Ausnehmung zu einem seitlichen Rand des Gerätes offen und die Steckrichtung verläuft im wesentlichen parallel zur Ebene der Platten. Dadurch wird erreicht, daß die Steckverbindung bspw. beim Zusammensetzen mehrerer Platten miterfolgen kann oder bei schon verlegten Elementen diese noch (seitlich) für den Steckanschluß zugänglich sind, nach außen (zum beheizenden Raum hin) jedoch eine geschlossene Fläche entstehen kann.

Bevorzugt ist an einem weiteren Rand, bevorzugt in Gegenüberlage zu der Ausnehmung, eine weitere seitlich offene Ausnehmung vorgesehen, in der eine weitere Steckverbinderhälfte angeordnet ist.

Die plattenförmigen Elektrogeräte haben üblicherweise eine regelmäßige Form, z.B. rechteckig oder quadratisch, und lassen sich dementsprechend - durch die Nut- und Federverbindung - zu größeren Gebilden, z.B. Reihen, zusammensetzen. Ist nun z.B. an demjenigen Rand, an dem eine Steckverbinderhälfte angeordnet ist, gegenüberliegenden Rand eine weitere, passende Steckverbinderhälfte auf der gleichen Höhe (sowohl senkrecht zur Plattenerstreckung wie im Abstand von den Querrändern gerechnet) angebracht, so lassen sich bei entsprechender Ausbildung der Steckverbinderhälften zwei übereinstimmende der Geräte unter Schaffung eines elektrischen Kontaktes verbinden. Dabei ist prinzipiell sowohl eine Reihen- wie eine parallelschaltung der in den jeweiligen Geräten vorhandenen Heizfolien möglich, wobei die Parallelschaltung bevorzugt ist.

Dabei ist, gemäß einer bevorzugten Ausführungsform, vorgesehen, daß eine der beiden Steckverbinderhälften den Rand ihrer Ausnehmung so weit überragt, und die andere in ihrer Ausnehmung so weit entsprechend zurückversetzt ist, daß die Steckverbinderhälften, wenn zwei der Geräte mit ihren entsprechenden Rändern zusammengefügt werden, eine leitende Steckverbindung ergeben. Die Steckverbindung kann hier also ohne irgendwelche Zwischenstecker ausgebildet sein.

Alternativ bevorzugt ist zumindest eine Steckverbinderhälfte in der Ausnehmung so weit zurückversetzt, daß ein Zwischen- oder Brückenstecker zur Verbindung der Steckverbinderhälften in der bzw. den Ausnehmungen anordenbar ist, ohne die Berührung der Ränder beim Zusammensetzen der Geräte zu einer Fläche zu behindern.

Besonders bevorzugt sind die Steckverbinderhälften in zwei benachbarten Ecken, jedoch mit zur Anlagerichtung an das durch die Steckverbindung zu verbindende Nachbargerät senkrechter Steckrichtung angeordnet, ist im Bereich der Steckverbinderhälften jeweils eine Eckausnehmung vorgesehen, und ist ein im wesentlichen U-förmiges Steck-Verbindungselement zur Aufnahme in den Eckausnehmungen und zur leitenden Verbindung der Steckverbinderhälften vorgesehen.

Durch diese Ausbildung ist es inbesondere möglich, eine Reihe aus rechteckigen Geräten mechanisch zusammenzufügen, und die Steckverbindung nachträglich an der offenen, zur Reihenerstreckung parallelen Seite noch durchzuführen. Durch die Ausnehmungen und/oder Eckausnehmungen wird jedoch durch den Einsatz der U-förmigen (Brücken-)Stecker der Anschluß einer weiteren Reihe nicht behindert.

Nachfolgend wird die Erfindung anhand bevorzugter Ausführungsformen unter Bezugnahme auf die beigefügten Zeichnungen, auf die wegen ihrer Klarheit und Übersichtlichkeit bezüglich der Offenbarung besonders hingewiesen wird, noch näher erläutert.

Es zeigen:

Fig. 1 schematisch ein Gerät nach der Erfindung bei abgenommener Deckplatte;

Fig. 2 schematisch das elektrische Schaltbild beim Zusammenschluß mehrerer Geräte nach Fig. 1;

Fig. 3 eine weitere Ausführungsform der Erfindung in Explosionsdarstellung.

Fig. 4 schematisch ein Schaltbild bei der Reihenbildung aus mehreren Geräten nach Fig. 3;

Fig. 5A eine Stift-Steckdose, wie sie in der Erfindung verwandt wird, teilweise im Schnitt;

Fig. 5B die Stift-Steckdose aus Fig. 5A, dort von links gesehen;

Fig. 6A das Steckergesicht eines Brücken-Verbindungssteckers, der in der Erfindung verwandt wird;

Fig. 6B eine Ansicht von links in Fig. 6A, teilweise im Schnitt.

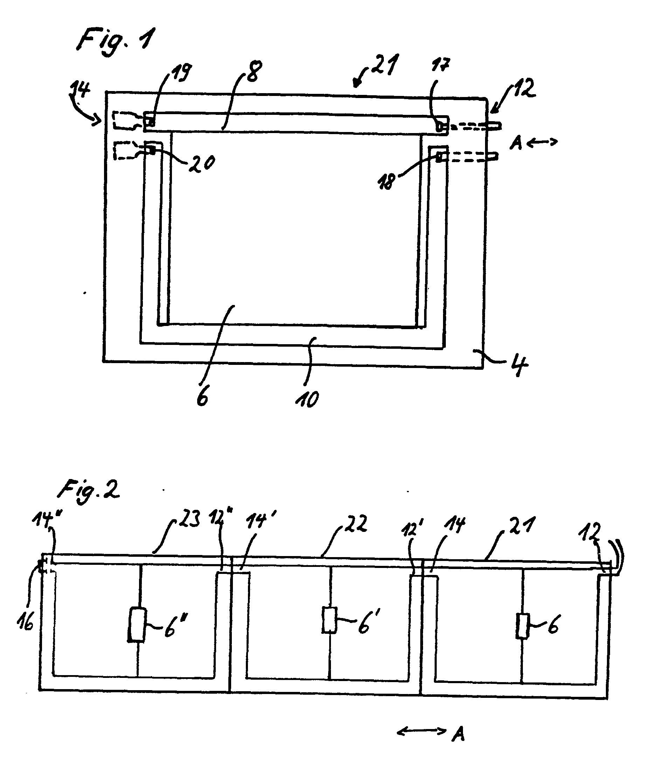

In Fig. 1 weist das ingesamt mit 21 bezeichnete Gerät eine Grundplatte 4 auf. Die Grundplatte 4 ist z.B. eine Holzspanplatte DIN 68763 V100 und dient als Isolations- und Wärmespeicherschicht. Auf der Grundplatte 4 ist eine Flächenheizfolie 6 aufgebracht. Die Flächenheizfolie 6 besteht aus Kohlenstoff-Graphit-beschichtetem Glasfasergewebe. Sie ist wasserfest in Polyester eingeschweißt (hier nicht gezeigt). Die Folie 6 ist an ihren beiden Längsseiten mit Kupferkontaktbändern 8 bzw. 10 versehen. Wenn die Kupferkontaktbänder 8 und 10 somit an eine Stromquelle gelegt werden, fließt ein Strom durch die Flächenheizfolie 6 und erwärmt sie. Das Kontaktband 10 ist seitlich der Flächenheizfolie, jedoch um eine seitliche Stromableitung zu vermeiden im Abstand davon, nach (in Fig. 1) oben in die Nähe des Kontaktbandes 8 geführt. In eine nach unten (in Fig. 1 hinten) und seitlich (in Fig. 1 rechts bzw. links) offene Ausnehmung (in Fig. 1 nicht gezeigt) der Grundplatte 4 sind zwei hier nur schematisch angedeutete Steckdosen 12 bzw. 14 eingesetzt. Die in Fig. 1 rechte Steckdose 12 ist als Stift-Steckdose, die in Fig. 1 linke Steckdose 14 ist als Buchsen-Steckdose ausgebildet. Dabei ist die Anordnung und Ausbildung dieser beiden Steckverbinderhälften so gewählt, daß beim Aneinanderfügen eines gleichartigen Gerätes 22 dessen Stiftsteckkontakt 12' mit dem Buchsensteckkontakt 14 des Gerätes 21 beim nahtlosen Aneinanderfügen eine elektrische Steckverbindung ergibt.

Die Kontakte der Dosen 12, 14, 12' usw. sind über Lötkontakte 17, 18 bzw. 19, 20, die sich in zur Ebene der Grundplatte 4 senkrechter Richtung nach oben (in Fig. 1 nach vorne) erstrecken, mit den Kontaktbändern 8 bzw. 10 verbunden, und zwar, wie gezeigt, in solcher Weise, daß sich beim Aneinanderfügen mehrerer Geräte 21, 22 und 23 (vgl. Fig. 2) eine Parallelschaltung der Flächenheizfolien 6, 6' und 6'' ergibt.

Die vordere (in Fig. 2 rechte) Steckdose 12 ist über einen Buchsenstecker mit dem Netz verbunden, die hinterste Steckdose 14'' kann, wie in Fig. 2 angedeutet, mit einer Abdeckplatte 16 abgedeckt sein.

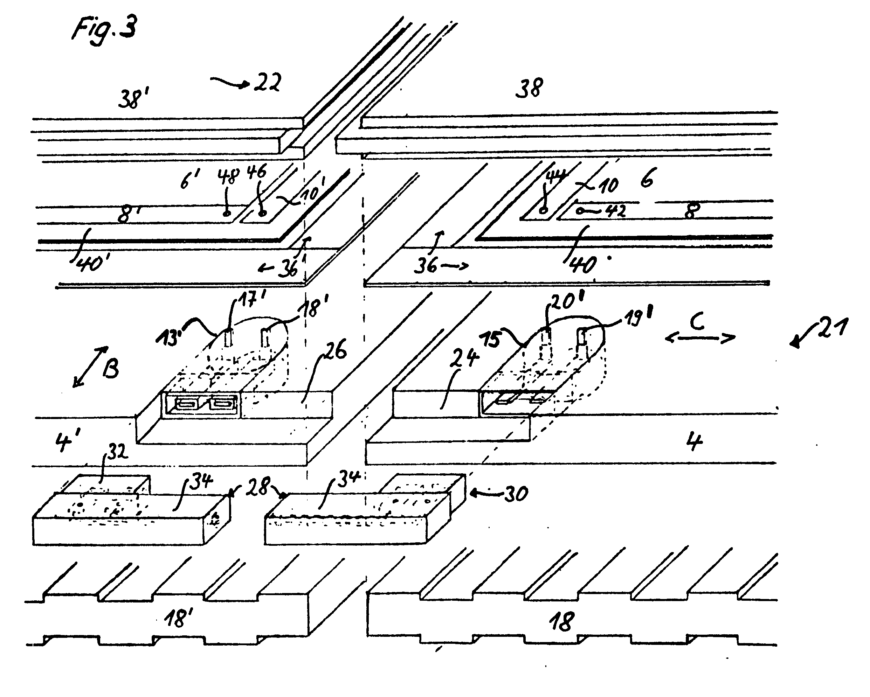

In Fig. 3 ist eine das gleiche Prinzip aufweisende, jedoch etwas modifizierte Ausführungsform in explosionsartiger Darstellung gezeigt. Gleiche oder einander entsprechende Teile sind hiermit gleichen Bezugszeichen wie denen der Fig. 1 und 2 versehen.

Die Geräte 21 bzw. 22 weisen auf ihrer Unterseite eine profilierte Styroporschicht 18 bzw. 18' zur Wärmeisolierung auf. Darauf ist die bei Fig. 1 schon erläuterte Grundplatte 4 bzw. 4', bspw. durch Verklebung, aufgebracht. Die Grundplatten weisen jeweils zwei, nach zwei schmalen Randseiten und, um Ausführungsbeispiel, nach oben offenen Eckausnehmungen 24 bzw. 26 auf. In Erweiterungen dieser Eckausnehmungen sind Steckdosen 15 bzw. 13' so eingelassen, daß sie (bis auf ihre Lötkontakte 19', 20' bzw. 17', 18') die Platten 4 bzw. 4' nicht überragen. Diese Steckdosen können beide als Stiftsteckdosen oder beide als Buchsensteckdosen ausgebildet sein, oder, wie im Ausführungsbeispiel, die eine (15) als Stiftund die andere (13') als Buchsen-Steckdose.

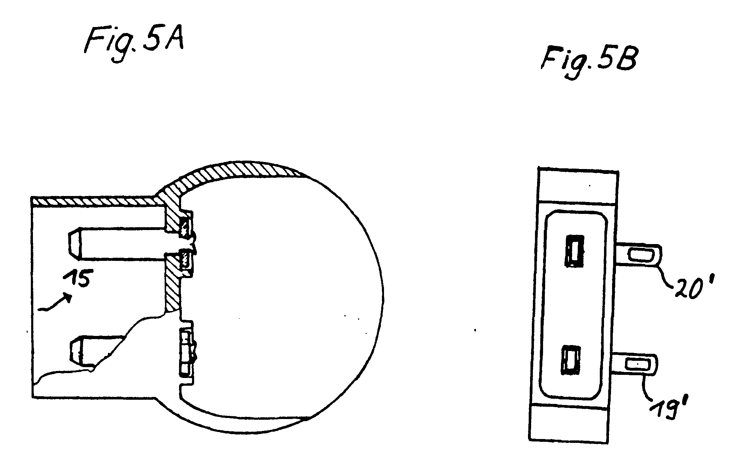

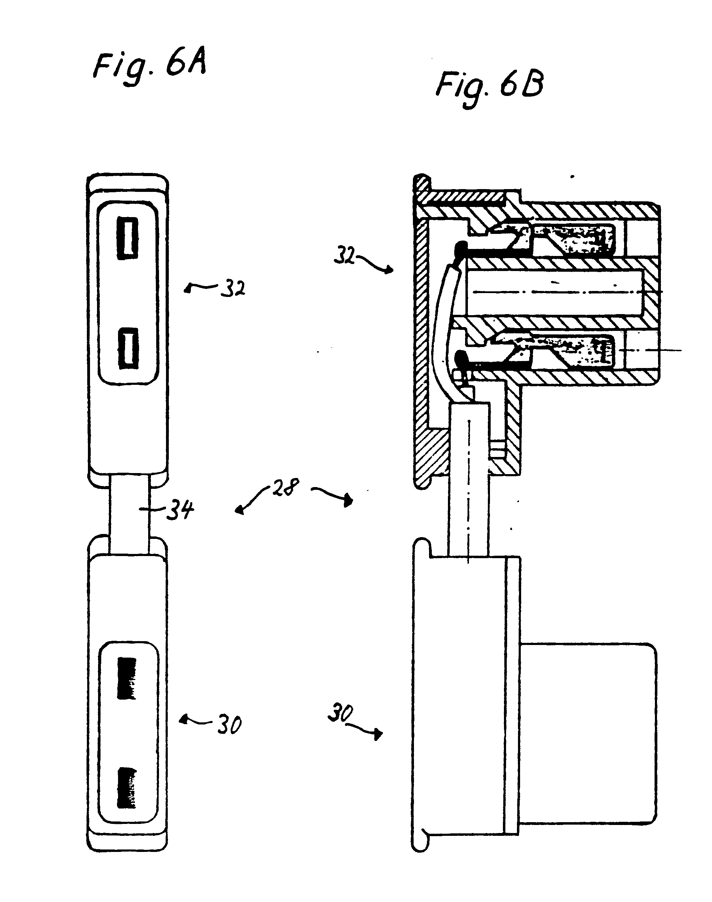

Die Richtung der Zusammenfügung zweier elektrisch zu verbindender Geräte ist mit C angedeutet. Die Steckrichtung der beiden Steckdosen 15 und 13' ist jedoch senkrecht zur Richtung C, aber ebenfalls in Richtung der Plattenerstreckung und durch den Doppelpfeil B angedeutet. Zur Verbindung der jeweiligen Kontakte der in Fig. 5 noch einmal näher erläuterten Steckdosen 15 und 13' dient ein in Fig. 6 näher erläuterter Brückenstecker 28 mit zwei Steckerkontaktpaaren 30 und 32. Das (wie in Fig. 3 angedeutet) starre oder (wie in Fig. 6 angedeutet) bewegliche Verbindungselement 34 findet in den Ausnehmungen 24 bzw. 26 Aufnahme.

Diese Ausbildung ermöglicht es beim Verlegen einer Reihe (die sich ja in die Richtung C erstreckt) auf die Steckverbindung noch keine Rücksicht nehmen zu müssen. Diese kann vielmehr erst nachträglich von der offenen Seite der Reihe her durchgeführt werden. Eine starre Ausbildung der Stecker 28 vermag den Zusammenhalt der Geräte 21 und 22 gegen ein Auseinanderstreben in Richtung C zu erhöhen, eine bewegliche Verbindung 34 erleichtert das Anbringen des Steckers 28 auch dann, wenn sich die relative Lage der Steckdosen 15 und 13' beim Verlegen der Geräte etwas verschoben haben sollte.

Die Geräte weisen ferner (in Fig. 1 nicht gezeigte) Randabdicht- und Höhenausgleichselemente 36 und 36' auf, die auch als Klebestreifen zur Verbindung der Grundplatten 4 bzw. 4' mit den Deckplatten 38 bzw. 38' dienen können.

Die Flächenheizfolien 6 bzw. 6' und die dazugehörenden Kontaktstreifen 8, 10 bzw. 8', 10' sind hier in gleicher Dicke dargestellt. Diese Ausführungsform stellt sicher, daß sich die Heizfolie nach Verklebung von Grundund Deckplatte nicht verwölben kann und dadurch ein gleichmäßiger Wärme Übergang gewährleistet ist. Die Lötkontakte 19' bzw. 20' bzw. 18' bzw. 17' greifen in Lötöffnungen 42 bzw. 44 bzw. 46 bzw. 48 der zugehörigen Kontaktstreifen ein und werden beim Zusammenbau der Geräte dort verlötet. Es ergibt sich auch in diesem Ausführungsbeispiel wieder eine Reihenschaltung oder parallelschaltung, je nach Verdrahtung der Kontakte im Brückenstecker.

Die Deckplatten 38 und 38' sind an den Längsund Querkanten mit einem korrespondierenden Nut-Federprofil versehen, um ein sicheres und fugenloses Aneinanderfügen der Geräte zu einer ebenen Fläche zu gewährleisten.

Bei entsprechenden Anwendugnen kann selbstverständlich auch eine Reihenschaltung der Geräte 21, 22 usw. vorgesehen sein.

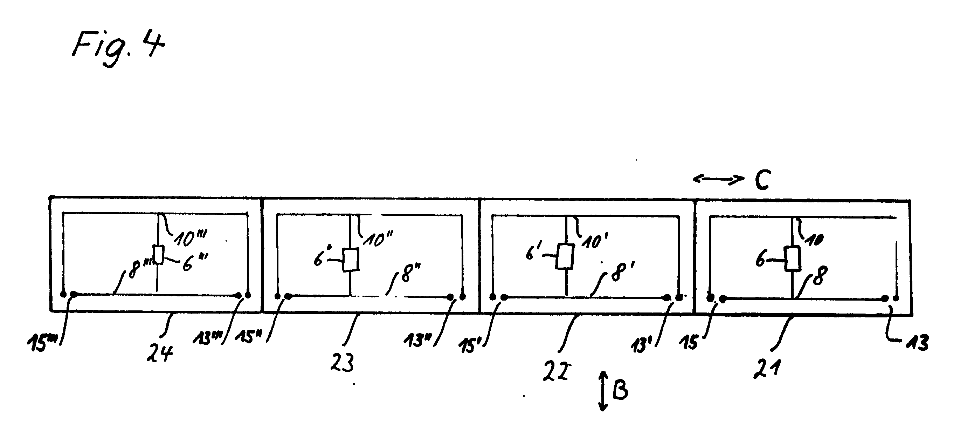

Fig. 4 zeigt eine Anordnung von vier Geräten in einer Reihe mit der Erstreckungsrichtung C. Die Steckrichtung zur Verbindung der Platten durch Brückenstecker ist durch B angegeben.

In Fig. 5 ist eine Stiftsteckdose, wie sie bei den Geräten verwendet wird, noch einmal im Detail gezeigt. Das die Verbindung zum nächsten Gerät (hier über einen Zwischenstecker) herstellende Kontaktpaar 15 ist hier als Stiftkontaktpaar ausgebildet. In Fig. 5B ist besonders deutlich zu sehen, daß sich die Kontaktfahnen 19' und 20' senkrecht zur Steckrichtung nach oben erstrecken.

Fig. 6 zeigt eine etwas andere (als in Fig. 3) Ausführungsform des Brückensteckers 28 in zwei Ansichten, wobei die Aufsicht der Fig. 6B teilweise geschnitten ist.

Es ist ersichtlich, daß z.B. das Teileelement 30 ohne Stifte als Blind-Abschlußstecker am letzten Gerät 23 verwendet werden könnte, während das Teileelement 32 mit einer Verlängerung des Kabelstückes 34 zum Netzanschluß der Gerätereihe dienen kann.

Statt eine Reihe mit einem Blindstecker abzuschließen, kann vorgesehen sein, eine Verbindung zur nächsten Reihe in analoger Weise wie die Verbindung zwischen den platten einer Reihe zu schaffen.

Es ist also ersichtlich, daß nur eine geringe Zahl von Stecker und Dosentypen benötigt wird.

**Patentansprüche**

1. Elektrogerät zur Verwendung als Flächenheizelement, mit einer Grundplatte (4, 4'), einer Deckplatte (38, 38') und mit einer zwischen Grundund Deckplatte angeordneten Heizfolie (6, 6'''), die vermittels an zwei einander gegenüberliegend ihrer Ränder angeordneter Kontaktbänder (8, 8''', 10, 10''') über einen Außenanschluß mit mindestens zwei Kontakten mit Strom versorgt wird, wobei der Außenanschluß im Bereich einer Ausnehmung des Verbundes ausgebildet ist und zur elektrischen Verbindung von zwei oder mehreren Flächenheizelementen an einem weiteren Randbereich ein Kontaktierungsvorsprung vorgesehen ist, dadurch gekennzeichnet, daß

a) der Außenanschluß als Steckverbindungshälfte (12, 12''', 14, 14'''; 13, 13'', 15, 15'') ausgebildet ist,

b) die elektrischen Kontakte der Steckverbindungshälfte ausserhalb der Ausnehmung (24, 26) in dem Verbund so angeordnet sind, daß die Steckrichtung (A, B) im wesentlichen parallel zur Ebene der Flächenheizelemente verläuft,

c) der Kontaktierungsvorsprung als komplementäre Steckverbindungshälfte (30, 32, 34) ausgebildet ist, und

d) die komplementäre Steckverbindungshälfte (30, 32, 34) so gestaltet ist, daß sie im zusammengesteckten Zustand die Ausnehmung (24, 26) bündig ausfüllt.

2. Elektrogerät nach Anspruch 1, dadurch gekennzeichnet, daß an einem weiteren Rand, bevorzugt in Gegenüberlage zu der Ausnehmung, eine weitere seitlich offene Ausnehmung vorgesehen ist, in der eine weitere Steckverbinderhälfte angeordnet ist.

3. Elektrogerät nach Anspruch 2, dadurch gekennzeichnet, daß eine der beiden Steckverbinderhälften (12-12'') den Rand ihrer Ausnehmung so weit überragt, und die andere (14-14'') in ihrer Ausnehmung so weit entsprechend zurückversetzt ist, daß die Steckverbinderhälften, wenn zwei der Geräte (21-23) mit ihren entsprechenden Rändern zusammengefügt werden, eine leitende Steckverbindung ergeben (Fig. 1, Fig. 2).

4. Elektrogerät nach Anspruch 2, dadurch gekennzeichnet, daß zumindest eine Steckverbinderhälfte (15, 13') in der Ausnehmung (24, 26) so weit zurückversetzt ist, daß ein Zwischen- oder Brückenstecker (28) zur Verbindung der Steckverbinderhälften in der bzw. den Ausnehmungen (24, 26) anordenbar ist, ohne die Berührung der Ränder der Geräte beim Zusammensetzen der Geräte zu einer Fläche zu behindern (Fig. 3 und 4).

5. Elektrogerät nach Anspruch 4, dadurch gekennzeichnet, daß die Steckverbinderhälften (15, 13') in zwei Ecken, jedoch mit zur Anlagerichtung (C) an das durch die Steckverbindung zu verbindende Nachbargerät (22, 21) senkrechter Steckrichtung (B), angeordnet sind, daß im Bereich der Steckverbinderhälften jweils eine Eckausnehmung (24, 26) vorgesehen ist, und daß ein im wesentlichen U-förmiges Steck-Verbindungselement (28) zur Aufnahme in den Eckausnehmungen (24, 26) und zur leitenden Verbindung der Steckverbinderhälften (15, 13') vorgesehen ist (Fig. 3).

6. Elektrogerät nach einem der vorgehenden Ansprüche, dadurch gekennzeichnet, daß die Kontakte der Steckverbinderhälften mit zur Plattenebene senkrechten Lötfahnen (17-20, 17'-20') zur Verbindung mit den Kontaktbändern versehen sind.

## Revendications

1. Dispositif électrique destiné à être utilisé en tant que panneau chauffant, comprenant une plaque de base (4, 4'), une plaque de recouvrement (38, 38') et une feuille chauffante (6, 6''') disposée entre la plaque de base et la plaque de recouvrement, qui est alimentée en courant par deux bandes de contact (8, 8''', 10, 10''') disposées sur ses bords opposés par l'intermédiaire d'une prise externe comprenant au moins deux contacts, la prise externe étant prévue dans la région d'un évidement de l'élément composite et étant munie en vue de la liaison électrique de deux ou plusieurs panneaux chauffants d'une saillie de contact dans une autre région de bord, caractérisé en ce que

a) la prise externe est constituée sous forme de moitiés de connecteur (12, 12''', 14, 14'''; 13, 13'', 15, 15''),

b) les contacts électriques des moitiés de connecteur sont disposés dans l'élément composite à l'extérieur de l'évidement (24, 26) de manière que la direction d'enfichage (A, B) soit sensiblement parallèle au plan des panneaux chauffants,

c) la saillie de contact est constituée sous forme d'une moitié de connecteur complémentaire (30, 32, 34), et

d) la moitié de connecteur complémentaire (30, 32, 34) est constituée de manière à remplir de façon jointive l'évidement (24, 26) à l'état assemblé.

2. Dispositif électrique selon la revendication 1, caractérisé en ce qu'il est prévu sur un autre bord, de préférence à l'opposé de l'évidement, un autre évidement ouvert vers le côté et dans lequel est disposée une autre moitié de connecteur.

3. Dispositif électrique selon la revendication 2, caractérisé en ce que l'une des deux moitiés de connecteur (12, 12') dépasse du bord de son évidement, et l'autre (14, 14'') est enfoncée de façon correspondante dans son évidement, sur une distance telle que les moitiés de connecteur établissent une liaison par enfichage conductrice quand deux dispositifs (21, 23) sont assemblés par leurs bords correspondants (Figure 1, Figure 2).

4. Dispositif électrique selon la revendication 2, caractérisé en ce qu'une moitié de connecteur (15, 13') au moins est enfoncée dans l'évidement (24, 26) suffisamment pour pouvoir y placer un connecteur intermédiaire ou de pontage (28) pour la liaison des moitiés de connecteur dans le ou les évidements (24, 26), sans que cela empêche le contact des bords des dispositifs pendant l'assemblage de ces derniers pour obtenir une surface (Figures 3 et 4).

5. Dispositif électrique selon la revendication 4, caractérisé en ce que les moitiés de connecteur (15, 13') sont disposées dans deux coins, et avec une direction d'enfichage (B) perpendiculaire à la direction de la pose (C) de dispositifs voisins (22, 21) à relier par la liaison par enfichage, qu'il est prévu dans la région des moitiés de prise un évidement de coin respectif (24, 26), et qu'il est prévu un élément de liaison par enfichage sensiblement en forme de U (28) destiné à être reçu dans les évidements de coin (24, 26) et à établir une liaison conductrice entre les moitiés de connecteur (15, 13') (Figure 3).

6. Dispositif électrique selon l'une des revendications précédentes, caractérisé en ce que les contacts des moitiés de connecteur sont munis de pattes de brasage (17-20, 17'-20') qui sont perpendiculaires au plan des panneaux et qui sont destinées à la liaison avec les bandes de contact.

**Claims**

1. An electrical device for use as a panel heating element, having a base plate (4, 4'), a cover plate (38, 38') and having a heating foil (6, 6''') which is disposed between base plate and cover plate and which is supplied with current by means of contact strips (8, 8''', 10, 10''') arranged at two of its opposite margins, via an external connection with at least two contacts, the external connection being formed in the region of a recess in the composite structure and a contact-making projection being provided at a further marginal region for the electrical connection of two or more panel heating elements, characterised in that
a) the external connection is constructed in the form of half of a plug-and-socket connection. (12, 12''', 14, 14''', 13, 13'', 15, 15''),
b) the electrical contacts of the half of a plug-and-socket connections are arranged outside the recess (24, 26) in the composite structure so that the plug in direction (A, B) extends substantially parallel to the plane of the panel heating elements,
c) the contact-making projection is constructed in the form of a complementary half of a plug-and-socket connection (30, 32, 34), and
d) the complementary half of a plug-and-socket connection (30, 32, 34) is so formed that, in the plugged together state, it fills the recess (24, 26) so as to lie flush.

2. An electrical device according to Claim 1, characterised in that in a further margin, preferably situated opposite the recess, there is provided a further recess which is open at the side and in which there is disposed a further half of a plug-and-socket connection.

3. An electrical device according to Claim 2, characterised in that one of the two halves of the plug-and-socket connection (12-12'') projects so far beyond the edge of its recess, and the other (14-14'') is correspondingly set back so far in its recess that when two of the devices (21-23) are joined together by their corresponding edges, the halves of the plug-and-socket connection form a conducting plug-and-socket connection (Figure 1, Figure 2).

4. An electrical device according to Claim 2, characterised in that at least one half of a plug-and-socket connection (15, 13') is set back so far in the recess (24, 26) that an adaptor or bridge connector (28) can be disposed in the recess or recesses (24, 26) to connect the halves of the plug-and-socket connection, without hindering the contact between the edges of the devices during the assembly of the devices to form a plane (Figures 3 and 4).

5. An electrical device according to Claim 4, characterised in that the halves (15, 13') of the plug-and-socket connection are arranged in two corners but with a plug-in direction (B) perpendicular to the direction (C) of bearing against the neighbouring device (22, 21) to be connected by the plug-and-socket connection, that a corner recess (24, 26) is provided in the region of each half of the plug-and-socket connection, and that a substantially U-shaped plug-and-socket connection element (28) is provided to be received in the corner recesses (24, 26) and for the conductive connection of the halves (15, 13') of the plug-and-socket connection (Figure 3).

6. An electrical device according to any one of the preceding Claims, characterised in that the contacts of the halves of the plug-and-socket connection are provided with soldering lugs (17-20, 17'-20') perpendicular to the plane of the panels for the connection to the contact strips.

Fig. 1

Fig. 2

Fig. 3

EP 0 150 448 B1

Fig. 4

EP 0 150 448 B1

Fig.5A

Fig.5B

15

20'

19'

Fig. 6A

Fig. 6B

32

34

28

30

32

30